# EUROPÄISCHE PATENTSCHRIFT

(11) **EP 1 542 881 B1**
(45) Veröffentlichungstag und Bekanntmachung des Hinweises auf die Patenterteilung: **23.08.2006**
(21) Anmeldenummer: 03798169.3
(22) Anmeldetag: 19.09.2003
(51) Int. Cl.: B60H 1/34

(54) **LUFTEINSTRÖMER, INSBESONDERE FÜR EIN KRAFTFAHRZEUG**
AIR INLET, IN PARTICULAR FOR A MOTOR VEHICLE
ENTREE D'AIR, DESTINEE EN PARTICULIER A UN VEHICULE AUTOMOBILE

(30) Priorität: 20.09.2002 DE 10243974
(43) Veröffentlichungstag der Anmeldung: 22.06.2005
(73) Patentinhaber: Behr GmbH & Co. KG, 70469 Stuttgart (DE)
(72) Erfinder: BURR, Reinhold, 89522 Heidenheim (DE); KLINGLER, Dietrich, 73540 Heubach (DE); VOIGT, Klaus, 74321 Bietigheim-Bissingen (DE)
(74) Vertreter: Grauel, Andreas
(86) Internationale Anmeldenummer: PCT/EP2003/010436
(87) Internationale Veröffentlichungsnummer: WO 2004/029427

(56) Entgegenhaltungen:
- EP-A- 0 596 446
- DE-A- 2 813 909
- DE-A- 3 911 616
- DE-A- 10 207 221
- US-A- 4 407 186
- US-A- 5 137 491

## Beschreibung

Die Erfindung betrifft einen Lufteinströmer, insbesondere für ein Kraftfahrzeug, gemäß dem Oberbegriff des Anspruchs 1.

Aus der EP 1 223 061 A2 ist ein Lufteinströmer, insbesondere zur Fahrzeugklimatisierung, mit einem Rahmen, mehreren Lamellen, die um eine erste Achse verschwenkbar angeordnet sind, und mindestens einem Koppelelement, mit dem jede der Lamellen gekoppelt ist, wobei das Koppelelement relativ zur ersten Achse zwischen einer Neutralstellung, in der die Lamellen zueinander parallel sind, und einer Komfortstellung verstellbar sind, in der mindestens ein Teil der Lamellen in zueinander entgegengesetzter Richtung verschwenkbar ist. Der Lufteinströmer ist vor einem Ausströmer angeordnet, aus dem ein Luftstrom austritt, dessen Richtung mit Hilfe des Lufteinströmers eingestellt werden kann. Dabei kann der Luftstrom mit Hilfe der zueinander entgegengesetzt verschwenkten Lamellen aufgefächert werden, so dass ein divergierender Luftstrom erzeugt wird, in welchem geringere Strömungsgeschwindigkeiten herrschen als bei einem Luftstrom mit konstantem Querschnitt, so dass auch bei einem hohen Luftdurchsatz verhindert werden kann, dass der austretende Luftstrom mit hohen Geschwindigkeiten auf einen Fahrzeuginsassen auftrifft. Ein derartiger Lufteinströmer lässt jedoch noch Wünsche offen.

Die gattungsgemäße DE 28 13 909 offenbart eine Instrumententafel für Kraftfahrzeuge, mit einem Kanalteil zur Zufuhr klimatisierter Luft in den Fahrzeuginnenraum. Das Kanalteil ist in zwei Kanäle unterteilt, welche unterschiedlich temperierte Luft führen können.

Aus der DE 39 11 616 A1 ist eine Heiz- oder Klimaanlage für den Fahrgastraum von Kraftfahrzeugen bekannt, bei welcher jeweils zwei, Luft von unterschiedlicher Temperatur führende Kanäle vorgesehen sind. Die beiden Kanäle münden in einer Mischluftkammer, die zu einer zur Belüftung des Fahrgastraumes dienenden Düsenöffnung einer Luftauslassdüse führt.

Es ist Aufgabe der Erfindung, einen verbesserten Lufteinströmer zur Verfügung zu stellen.

Diese Aufgabe wird gelöst durch einen Lufteinströmer mit den Merkmalen des Anspruchs 1. Vorteilhafte Ausgestaltungen sind Gegenstand der Unteransprüche.

Erfindungsgemäß ist ein Lufteinströmer mit einem Luft zuführenden Luftkanal und einer am Ende des Luftkanals angeordneten Dosiervorrichtung und einer Luftleitvorrichtung vorgesehen, bei dem die Luft in der Luftleitvorrichtung zumindest bereichsweise in mehrere Teilkanäle, insbesondere zwei Teilkanäle, aufgeteilt ist und bei dem im Ausströmbereich des Luftkanals ein miltlerer Bereich des Luftkanals und ein äußerer Bereich des Luftkanals vorgesehen ist, denen durch unterschiedliche Teilkanäle Luft zuführbar ist. Hierbei ist zumindest im Eintrittsbereich der Luftleitvorrichtung neben der Teilung in die Teilkanäle keine wesentliche Richtungsänderung vorgesehen. Die Teilung des eingangs einteiligen Luftkanals erfolgt etwas beabstandet vom Austritt der Luft aus der Luftleitvorrichtung, vorzugsweise 1 bis 10, insbesondere 2 bis 5, mal dem mittleren Durchmesser des Luftkanals im entsprechenden Bereich vor dem Austritt aus der Luftleitvorrichtung, und reicht im Wesentlichen bis unmittelbar vor oder bis in die Dosiervorrichtung hinein. Eine derartige Ausgestaltung ist kostengünstig zu realisieren und bietet bei geringem Gewicht neben einer einfachen Montage einen geringen luftseitigen Druckabfall.

Vorzugsweise weist der Luftkanal einen Krümmer auf, wobei im Bereich des Krümmers die Luft auf mehrere, insbesondere zwei, Teilkanäle aufgeteilt ist. Vorzugsweise ist dabei der Krümmer Teil der Luftleitvorrichtung. Vorzugsweise weist der Krümmer einen Winkel von 60° bis 120°, insbesondere 80° bis 100°, vorzugsweise 90°, auf.

Vorzugsweise erfolgt die Aufteilung im Eintrittsbereich der Luftleitvorrichtung in den Bereich mit zwei Teilströmen achssymmetrisch, d.h. in radialer Richtung, insbesondere in der von der Mittellängsachse des Luftkanals und der Mittellinie des Krümmers definierten Ebene.

Vorzugsweise ist die Dosiervorrichtung vor der Luftleitvorrichtung angeordnet, insbesondere vor dem Krümmer, welcher vorzugsweise auch Teil der Luftleitvorrichtung sein kann.

Vorzugsweise ist die Luftverteilung auf die einzelnen Teilkanäle mittels einer Dosiervorrichtung steuerbar. Dabei kann vorzugsweise mit Hilfe eines der Teilkanäle eine Spotwirkung und mit Hilfe eines anderen Teilkanals ein Drall der Luft am Austritt erzeugt werden, welcher eine diffuse Einstellung bewirkt. Hierfür ist vorzugsweise eine Vorrichtung vorgesehen, welche dem entsprechenden Teilluftstrom einen Drall aufprägt. Ebenfalls ist ein in die Länge gezogener, spiralförmiger Bereich der Luftleitvorrichtung möglich, der ebenfalls einen Drall bewirkt.

Vorzugsweise ist die Dosiervorrichtung derart ausgebildet, dass die Luftströme der einzelnen Teilkanäle steuerbar sind, insbesondere unabhängig voneinander. Vorzugsweise steuert die Dosiervorrichtung sowohl die Verteilung der anströmenden Luft auf die einzelnen Teilkanäle als auch deren jeweilige Dosierung. Dies ermöglicht eine feine Dosierung.

Vorzugsweise ist als Dosiervorrichtung eine Stellvorrichtung vorgesehen, die eine mittels einer oder mehrerer Kurvenscheiben oder mit einer Kinematik gesteuerte Doppelklappe aufweist. Dies ermöglicht eine direkte Handverstellung mittels eines Drehknopfes durch den Insassen, so dass kein Stellmotor, keine Übersetzung o.ä. erforderlich ist.

Im Folgenden wird die Erfindung anhand eines Ausführungsbeispiels unter Bezugnahme auf die Zeichnung im Einzelnen erläutert. In der Zeichnung zeigen:

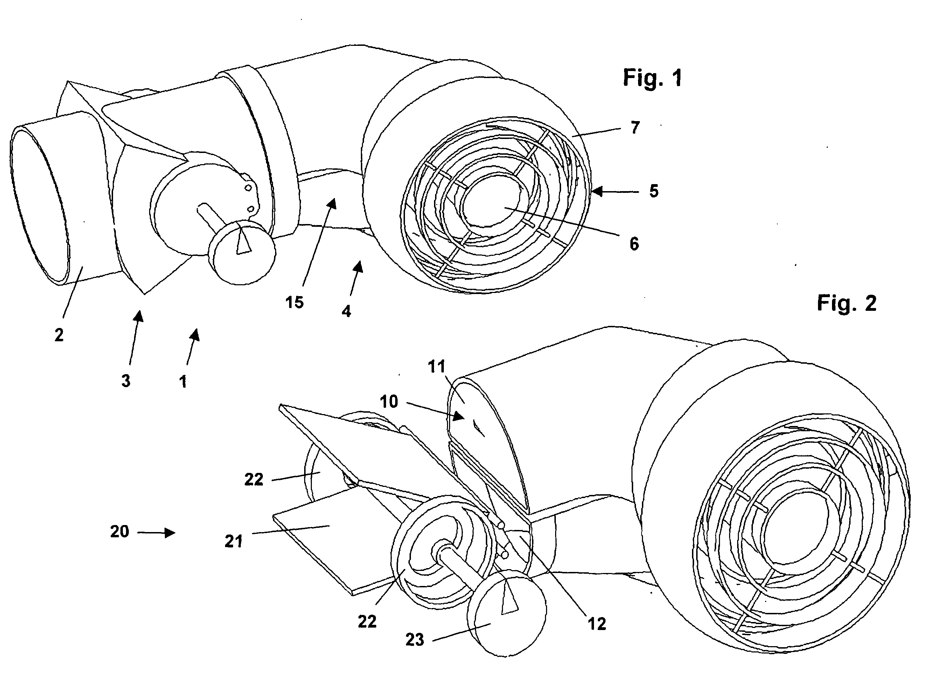

- Fig. 1: eine Ansicht eines Lufteinströmers,
- Fig. 2: eine teilweise offene Ansicht des Lufteinströmers von Fig. 1,
- Fig. 3: eine schematische Ansicht der möglichen Strömungsverläufe des Lufteinströmers von Fig. 1,
- Fig. 4: eine andere schematische Ansicht der möglichen Strömungsverläufe des Lufteinströmers von Fig. 1,

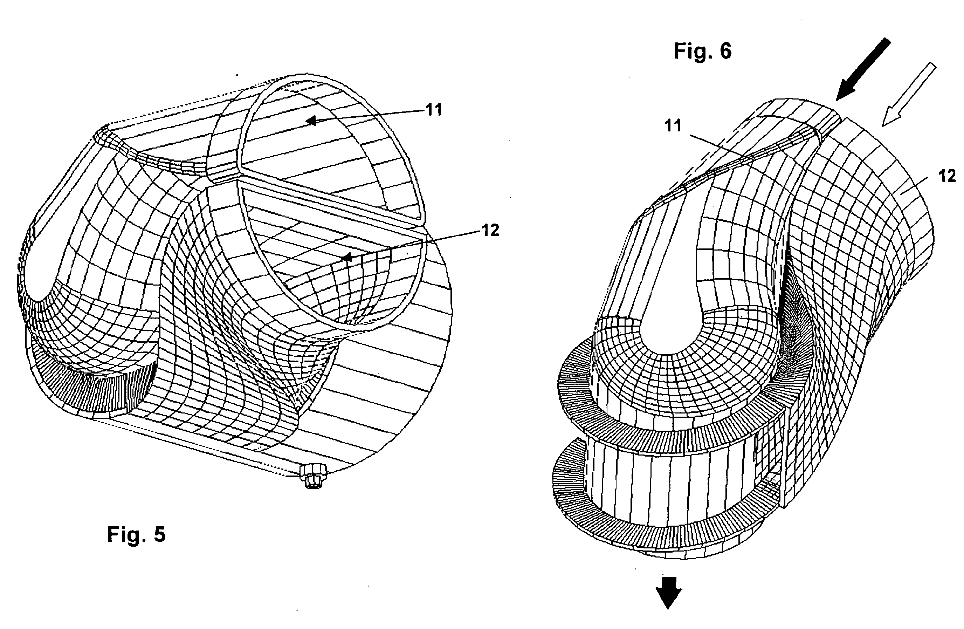

- Fig. 5: eine Detailansicht des Krümmerbereichs des Lufteinströmers von Fig. 1, und
- Fig. 6: eine andere, teilweise geschnitten dargestellte Detailansicht des Krümmerbereichs des Lufteinströmers von Fig. 1.

Ein erfindungsgemäßer Lufteinströmer 1, wie in den Figuren dargestellt, schließt an einen Luftkanal 2 an und umfasst eine Dosiervorrichtung 3, welche noch im Bereich des Luftkanals 2 angeordnet ist, eine Luftleitvorrichtung 4, welche der Dosiervorrichtung 3 nachgeordnet ist, und eine Vorrichtung 5 zur Einstellung der Richtung des Luftstroms, welche im Bereich der Austrittsöffnung 6 angeordnet ist. Diese Vorrichtung 5 weist einen schwenkbaren Ring 7 mit ringförmigen Luftleitschaufeln auf und ist auf im Prinzip bekannte Weise ausgestaltet. Die Austrittsöffnung 6 und somit auch die Vorrichtung 5 zur Einstellung der Richtung des Luftstroms sind im Armaturenbrett (nicht dargestellt) eines Kraftfahrzeugs eingebaut und somit kann der Insasse direkt die gewünschte Richtung des Luftstromes einstellen.

Die Luftleitvorrichtung 4 ist derart ausgebildet, dass an ihrem Eintrittsbereich 10 eine Aufteilung des Luftkanals 2 in zwei im Wesentlichen gleich große Teilkanäle 11 und 12 erfolgt. Die Teilung erfolgt in radialer Richtung quer zum im Wesentlichen kreisförmigen Querschnitt des Luftkanals 2. Dabei ist im Anfangsbereich, auch als Eintrittsbereich der Luftleitvorrichtung 4 bezeichnet, keine Richtungsänderung bezüglich der Richtung des Luftkanals 2 vorgesehen.

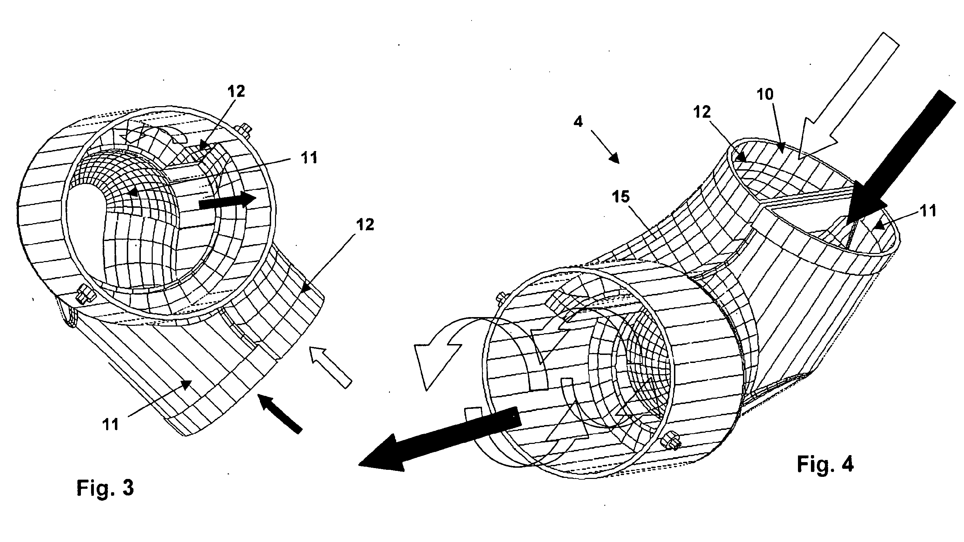

Im Anschluss an den Eintrittsbereich der Luftleitvorrichtung 4 ist ein 90°-Krümmer 15 angeordnet. Einer der beiden Teilkanäle 11, 12, im Folgenden als mittlerer Teilkanal 11 bezeichnet, durchläuft den 90°-Krümmer 15 auf direktem Wege, so dass die ihn durchströmende Luft im Wesentlichen ohne Drall zur Austrittsöffnung 6 gelangt, wie in den Figuren 3 und 4 durch schwarze Pfeile im Bereich des Luftaustritts angedeutet. Die in den mittleren Teilkanal 11 eintretende Luft ist ebenfalls durch einen schwarzen Pfeil angedeutet. Der andere Teilkanal 12, im Folgenden als äußerer Teilkanal 12 bezeichnet, wird derart umgeleitet, dass er wendelförmig um den mittleren Teilkanal 11 geführt wird und dadurch einen Drall, gemäß dem Ausführungsbeispiel entgegen dem Uhrzeigersinn, erhält, wie in den Figuren 3 und 4 durch die weißen Pfeile im Bereich des Luftaustritts angedeutet. Die in den äußeren Teilkanal 12 eintretende Luft ist ebenfalls durch einen weißen Pfeil angedeutet.

Gemäß dem vorliegenden Ausführungsbeispiel ist als Dosiervorrichtung 3 eine Stellvorrichtung 20 mit einer Doppelklappe 21 vorgesehen, die parallel zur Teilung des Kanals 2 angeordnet ist und die über zwei miteinander durch eine Welle verbundene Kurvenscheiben 22 derart steuerbar ist, dass jeder Teilkanal 11, 12 einzeln geöffnet und geschlossen werden kann. Die Steuerung erfolgt durch den Insassen über ein am (nicht dargestellten) Armaturenbrett angeordnetes Betätigungsorgan 23, vorliegend einen Drehknopf, welcher direkt mit der Welle verbunden ist.

Die Funktion des Lufteinströmers 1 ist Folgende: steht die Doppelklappe 21 in einer Stellung, die beide Teilkanäle 11 und 12 freigibt, so gelangt jeweils etwa ein gleich großer Luftstrom in die beiden Teilkanäle 11 und 12. Die den mittleren Teilkanal 11 durchströmende Luft gelangt auf direktem Wege durch den Krümmer 15 und wird in im Wesentlichen gerader Richtung und mit einem ausreichend gleichmäßigen Strömungsprofil bei einer geraden Einstellung des Ringes 7 in den Fahrzeuginnenraum abgegeben. Die den äußeren Teilkanal 12 durchströmende Luft gelangt in den wendelförmigen Teil der Luftleitvorrichtung 4 und erhält dadurch einen Drall, der im Bereich der Austrittsöffnung 6 dafür sorgt, dass der aus den Teilluftströmen bestehende Gesamtluftstrom sich rasch aufweitet.

Verschließt der eine Teil der Doppelklappe 21 den äußeren Teilkanal 12 und ist der mittlere Teilkanal 11 freigegeben, so gelangt die Luft ausschließlich durch den mittleren Teilkanal 11 zur Austrittsöffnung 6, so dass ein im Wesentlichen drallfreier Luftstrahl an den Fahrzeuginnenraum abgegeben wird (Spotwirkung).

Verschließt hingegen der andere Teil der Doppelklappe 21 den mittleren Teilkanal 11 und ist der äußere Teilkanal 12 freigegeben, so gelangt die Luft ausschließlich durch den wendelförmigen Teil der Luftleitvorrichtung 4 und erhält dadurch den o.g. Drall, der auch an der Austrittsöffnung 6 noch vorhanden ist und für eine starke Verwirbelung der Luft sorgt (diffuse Einstellung).

Zwischenbereiche können beliebig angesteuert werden, so dass eine feine Dosierung des Luftstromes mit Hilfe des Lufteinströmers 1 möglich ist. Durch das gleichzeitige Verschließen beider Teilkanäle, kann die Düse auch komplett verschlossen werden.

### Bezugszeichenliste

- 1: Lufteinströmer
- 2: Luftkanal
- 3: Dosiervorrichtung
- 4: Luftleitvorrichtung
- 5: Vorrichtung
- 6: Austrittsöffnung
- 7: Ring
- 10: Eintrittsbereich
- 11: mittlerer Teilkanal
- 12: äußerer Teilkanal
- 15: Krümmer
- 20: Stellvorrichtung
- 21: Doppelklappe
- 22: Kurvenscheibe
- 23: Betätigungsorgan

## Patentansprüche

1. Lufteinströmer, insbesondere für ein Kraftfahrzeug, mit einem Luft zuführenden Luftkanal (2), einer Dosiervorrichtung (3) und einer Luftleitvorrichtung (4), wobei die Luft in der Luftleitvorrichtung (4) zumindest bereichsweise in mehrere Teilkanäle (11, 12) aufgeteilt ist und im unterteilten Eintrittsbereich (10) keine wesentliche Richtungsänderung der Teilkanäle (11, 12) vorgesehen ist **dadurch gekennzeichnet, dass** die Luftleitvorrichtung (4) derart ausgebildet ist, dass im Ausströmbereich der Luftleitvorrichtung (4) ein mittlerer Bereich und ein äußerer Bereich vorgesehen sind, die durch unterschiedliche Teilkanäle (11, 12) anströmbar sind.

2. Lufteinströmer nach Anspruch 1, **dadurch gekennzeichnet, dass** die Luftleitvorrichtung (4) eine zumindest bereichsweise in Verlängerung der Längsrichtung des Luftkanals (2) verlaufende Trennwand aufweist.

3. Lufteinströmer nach einem der vorhergehenden Ansprüche, **dadurch gekennzeichnet, dass** die Teilung des Luftkanals (2) in mehrere Teilkanäle (11, 12) etwas beabstandet vom Austritt der Luft aus der Luftleitvorrichtung (4) vorgesehen ist, wobei der Abstand 1 bis 10, insbesondere 2 bis 5, mal dem mittleren Durchmesser des Luftkanals (2) im entsprechenden Bereich entspricht.

4. Lufteinströmer nach einem der vorhergehenden Ansprüche, **dadurch gekennzeichnet, dass** die Luftleitvorrichtung (4) einen Krümmer (15) aufweist, wobei im Bereich des Krümmers (15) die Luft auf mehrere, insbesondere zwei Teilkanäle (11, 12) aufgeteilt ist.

5. Lufteinströmer nach Anspruch 4, **dadurch gekennzeichnet, dass** der Krümmer (15) einen Winkel von 60° bis 120°, insbesondere 80° bis 100°, aufweist.

6. Lufteinströmer nach Anspruch 5, **dadurch gekennzeichnet, dass** der Krümmer (15) einen Winkel von 90° aufweist.

7. Lufteinströmer nach einem der vorhergehenden Ansprüche, **dadurch gekennzeichnet, dass** die Aufteilung im Eintrittsbereich (10) in den Bereich mit zwei Teükanälen (11, 12) achssymmetrisch ist.

8. Lufteinströmer nach einem der vorhergehenden Ansprüche, **dadurch gekennzeichnet, dass** die Dosiervorrichtung (3) vor der Luftleitvorrichtung (4) angeordnet ist.

9. Lufteinströmer nach einem der vorhergehenden Ansprüche, **dadurch gekennzeichnet, dass** die Luftleitvorrichtung (4) einen wendelförmigen oder in die Länge gezogenen, spiralförmigen Bereich aufweist.

10. Lufteinströmer nach einem der vorhergehenden Ansprüche, **dadurch gekennzeichnet, dass** die Dosiervorrichtung (3) derart ausgebildet ist, dass die den einzelnen Teilkanälen (11, 12) zuführbare Luft steuerbar ist.

11. Lufteinströmer nach einem der vorhergehenden Ansprüche, **dadurch gekennzeichnet, dass** die Dosiervorrichtung (3) sowohl die Verteilung der anströmenden Luft auf die einzelnen Teilkanäle (11, 12) als auch deren Dosierung steuert.

12. Lufteinströmer nach einem der vorhergehenden Ansprüche, **dadurch gekennzeichnet, dass** als Dosiervorrichtung (3) eine Stellvorrichtung (20) vorgesehen ist, die eine mittels einer Kurvenscheibe (22) oder einer Kinematik gesteuerte Doppelklappe (21) aufweist.

13. Lufteinströmer nach Anspruch 12, **dadurch gekennzeichnet, dass** die Stellvorrichtung (20) direkt über eine Welle mit einem Betätigungsorgan (23) verbunden ist.

## Claims

1. An air inlet, in particular for a motor vehicle, having an air channel (2) which supplies air, a metering device (3) and an air ducting device (4), the air in at least certain areas of the air ducting device (4) being divided into several part channels (11, 12) and there being no essential change of direction in the part channels (11, 12) in the divided inlet area (10),
**characterised in that**
the air ducting device (4) is designed in such a manner that provided in the outlet area of the air ducting device (4) are a central area and an outer area into which air is able to flow through different part channels (11, 12),

2. An air inlet in accordance with claim 1,
**characterised in that**
the air ducting device (4) has a dividing wall which runs in certain areas at least in extension of the length of the air channel (2).

3. An air inlet in accordance with one of the preceding claims,
**characterised in that**
the division of the air channel (2) into several part channels (11, 12) takes place some distance from the discharge of air from the air ducting device (4), the distance being 1 to 10, in particular 2 to 5 times the average diameter of the air channel (2) in the corresponding area.

4. An air inlet in accordance with one of the preceding claims,
**characterised in that**
the air ducting device (4) has an elbow (15), the air being divided into several, particularly two part channels (11, 12) in the area of the elbow (15).

5. An air inlet in accordance with claim 4,
**characterised in that**
the elbow (15) has an angle of 60° to 120°, in particular 80° to 100°.

6. An air inlet in accordance with claim 5,
**characterised in that**
the elbow (15) has an angle of 90°.

7. An air inlet in accordance with one of the preceding claims,
**characterised in that**
the division in the inlet area (10) is asymmetrical in the area with two part channels (11, 12).

8. An air inlet in accordance with one of the preceding claims,
**characterised in that**
the metering device (3) is positioned upstream of the air ducting device (4).

9. An air inlet in accordance with one of the preceding claims,
**characterised in that**
the air ducting device (4) has a helical or elongated spiral-shaped area.

10. An air inlet in accordance with one of the preceding claims,
**characterised in that**
the metering device (3) is designed in such a manner that the air supplied to the individual part channels (11, 12) can be controlled.

11. An air inlet in accordance with one of the preceding claims,
**characterised in that**
the metering device (3) controls both the distribution of the inflowing air into the individual part channels (11, 12) and its metering.

12. An air inlet in accordance with one of the preceding claims,
**characterised in that**
an adjusting device (20) which has a double flap (21) controlled by means of a cam wheel (22) or a kinematic device is provided as the metering device (3).

13. An air inlet in accordance with claim 12,
**characterised in that**
the adjusting device (20) is connected directly to an actuating organ (23) by a shaft.

## Revendications

1. Entrée d'air, en particulier pour un véhicule automobile, comprenant un conduit d'air (2) fournissant de l'air, un dispositif de dosage (3) et un dispositif déflecteur d'air (4), où l'air contenu dans le dispositif déflecteur d'air (4) est réparti, au moins par zones, dans plusieurs conduits partiels (11, 12) et, dans la zone d'entrée subdivisée (10), il n'est prévu aucune modification directionnelle importante des conduits partiels (11, 12), **caractérisée en ce que** le dispositif déflecteur d'air (4) est conçu de manière telle que, dans la zone d'évacuation du dispositif déflecteur d'air (4), il est prévu une zone centrale et une zone extérieure qui peuvent être alimentées par des conduits partiels différents (11, 12).

2. Entrée d'air selon la revendication 1, **caractérisée en ce que** le dispositif déflecteur d'air (4) présente une paroi de séparation s'étendant, au moins par zones, dans le prolongement de la direction longitudinale du conduit d'air (2).

3. Entrée d'air selon l'une ou l'autre des revendications précédentes, **caractérisée en ce que** la division du conduit d'air (2), en plusieurs conduits partiels (11, 12), est prévue en étant espacée d'un certain intervalle par rapport à la sortie de l'air s'échappant du dispositif déflecteur d'air (4), où l'intervalle correspond entre 1 et 10 fois, en particulier entre 2 et 5 fois, au diamètre moyen du conduit d'air (2) dans la zone correspondante.

4. Entrée d'air selon l'une quelconque des revendications précédentes, **caractérisée en ce que** le dispositif déflecteur d'air (4) présente un coude (15) où, dans la zone du coude (15), l'air est réparti sur plusieurs, en particulier sur deux conduits partiels (11, 12).

5. Entrée d'air selon la revendication 4, **caractérisée en ce que** le coude (15) présente un angle compris entre 60° et 120°, en particulier entre 80° et 100°.

6. Entrée d'air selon la revendication 5, **caractérisée en ce que** le coude (15) présente un angle de 90°.

7. Entrée d'air selon l'une quelconque des revendications précédentes, **caractérisée en ce que** la répartition dans la zone d'entrée (10) est à symétrie d'axe dans la zone comprenant deux conduits partiels (11, 12).

8. Entrée d'air selon l'une quelconque des revendications précédentes, **caractérisée en ce que** le dispositif de dosage (3) est disposé en amont du dispositif déflecteur d'air (4).

9. Entrée d'air selon l'une quelconque des revendications précédentes, **caractérisée en ce que** le dispositif déflecteur d'air (4) présente une zone hélicoïdale ou en forme de spirale, étirée en longueur.

10. Entrée d'air selon l'une quelconque des revendications précédentes, **caractérisée en ce que** le dispositif de dosage (3) est conçu de manière telle, que l'air fourni aux différents conduits partiels (11, 12) peut être régulé.

11. Entrée d'air selon l'une quelconque des revendications précédentes, **caractérisée en ce que** le dispositif de dosage (3) régule aussi bien la répartition de l'air arrivant dans les différents conduits partiels (11, 12), que son dosage.

12. Entrée d'air selon l'une quelconque des revendications précédentes, **caractérisée en ce qu'**un dispositif de réglage (20) est prévu comme un dispositif de dosage (3) qui présente un double volet (21) commandé au moyen d'une came (22) ou d'une cinématique.

13. Entrée d'air selon la revendication 12, **caractérisée en ce que** le dispositif de réglage (20) est relié directement à un organe de commande (23), par un arbre.
